# EUROPÄISCHE PATENTSCHRIFT

(11) **EP 3 838 074 B1**
(45) Veröffentlichungstag und Bekanntmachung des Hinweises auf die Patenterteilung: **16.07.2025**
(21) Anmeldenummer: 19218157.6
(22) Anmeldetag: 19.12.2019
(51) Int. Cl.: A47J 27/14, A47J 36/12

(54) **GARGERÄT, INSBESONDERE DRUCKGARGERÄT**
COOKING DEVICE, IN PARTICULAR PRESSURE COOKER
APPAREIL DE CUISSON, NOTAMMENT APPAREIL DE CUISSON SOUS PRESSION

(43) Veröffentlichungstag der Anmeldung: 23.06.2021
(73) Patentinhaber: MKN Maschinenfabrik Kurt Neubauer GmbH & Co. KG, 38300 Wolfenbüttel (DE)
(72) Erfinder: Kaczmarczyk, Marian, 38154 Königslutter am Elm (DE)
(74) Vertreter: Berghofer, Benedikt

(56) Entgegenhaltungen:
- EP-A1- 2 695 551
- EP-A2- 1 125 534
- DE-A1- 102017 115 556

## Beschreibung

Die vorliegende Erfindung betrifft ein Gargerät und insbesondere ein Druckgargerät. Druckgargeräte sind aus dem Stand der Technik bekannt. Derartige Geräte kommen im professionellen Bereich, insbesondere in der Großküche, wie einer Kantine zum Einsatz, wobei durch den erhöhten Druck während des Garens die Garzeit signifikant verkürzt werden kann.

Derartige Druckgargeräte, wie sie beispielsweise aus der EP 2 908 705 B1 bekannt sind, weisen einen Tiegel auf, der einen rechteckförmigen Garraum aufweist, der von einem schwenkbaren Deckel verschließbar ist, wobei der Tiegel mittels einer Tiegelschwenkachse schwenkbar in einem Gargerätgestell gelagert ist und der Deckel mittels eines Antriebs um eine Deckelschwenkachse schwenkbar ist, wobei das Gargerätgestell zwei seitliche Gestellsabschnitte und einen an der Rückseite des Tiegels angeordneten, die beiden seitlichen Gestellabschnitte verbindenden Verbindungsgestellabschnitt aufweist.

Die EP 1 125 534 A2 offenbart die Verwendung einer Feder zum Kompensieren des Deckelgewichts, um einer Bedienperson das Hochschwenken des Deckels zu erleichtern.

Die EP 2 695 551 A1 zeigt im Allgemeinen ein Gargerät mit wenigstens einem kippbar gelagerten, beheizbaren Tiegel, einem schwenkbaren Deckel zum Öffnen und Schließen des Tiegels, sowie einem Auf-Tisch-Gestell, das den Tiegel und auch den Deckel trägt.

Auch die DE 10 2017 115556 A1 offenbart im Allgemeinen ein Gargerät, das wenigstens ein motorisch schwenkbares Hauptelement umfasst, das ein Garbehälter oder eine Garraumabdeckung ist.

Bei dem Druckgargerät der Anmelderin, welches unter dem Namen "FlexiChef" seit vielen Jahren im Markt bekannt ist, ist der Deckel über seine Deckelschwenkachse zu beiden Seiten des Deckels in den beiden seitlichen Gestellabschnitten gelagert. Die beiden seitlichen Gestellsabschnitte sind ungleich breit, wobei in dem breiteren seitlichen Gestellsabschnitt der Antrieb des Deckels und weitere Elemente des Gargerätes, wie beispielsweise eine Anzeige- und Bedieneinrichtung, eine Gargerätesteuerung und Zuführeinrichtungen von Wasser, etc. untergebracht sind.

Durch den während des Druckgarens erzeugten starken Überdruck von bis zu 1,0 bar über dem Normaldruck ist eine besonders dichte Verschließposition des Deckels auf dem Tiegel notwendig. Dadurch bedingt weist der Deckel eine versteifte Konstruktion auf, die ein erhebliches Gewicht des Deckels mit sich bringt. Dies führt zu einer ungünstigen Krafteinleitung von deutlich außerhalb des Tiegels, wobei zusätzlich die Gefahr der Verformung des Deckels bei großem Druck besteht. Diese Anordnung bedingt weiterhin eine massive Konstruktion des Antriebs und der Kraftübertragung auf die Drehachse des Deckels, was mit einem großen Platzbedarf einhergeht. Zudem müssen die seitlichen Gestellsabschnitte deutlich höher sein als die Oberseite des Tiegels, weil sie die Drehachse des Tiegels lagern.

Der vorliegenden Erfindung liegt deshalb die Aufgabe zugrunde, die oben genannten Nachteile zu vermeiden und ein Tiegel-Gargerät, insbesondere ein Tiegel-Druckgargerät vorzuschlagen, bei dem eine günstige Krafteinleitung zum Verschwenken des Deckels geschaffen wird.

Erfindungsgemäß wird diese Aufgabe dadurch gelöst, dass ein Gargerät bereitgestellt wird, das einen Tiegel aufweist, der einen rechteckförmigen Garraum aufweist, der von einem schwenkbaren Deckel verschließbar ist. Der Tiegel ist mittels einer Tiegelschwenkachse schwenkbar in einem Gerätegestell gelagert und der Deckel ist mittels eines Antriebs um eine Deckelschwenkachse schwenkbar. Das Gargerätgestell weist zwei seitliche Gestellabschnitte und einen an der Rückseite des Tiegels angeordneten, die beiden seitlichen Gestellabschnitte verbindenden Verbindungsgestellabschnitt auf. Um die Deckelschwenkachse sind zwei Schwenkwellenabschnitte angeordnet, die drehbeweglich an dem Verbindungsgestellabschnitt angeordnet sind. Der Antrieb zum Schwenken des Deckels ist in dem Verbindungsgestellabschnitt angeordnet und umfasst einen Linearantrieb, der in der Lage und dazu eingerichtet ist, einen um eine Drehachse gelagerten Schwenkhebel zu Verschwenken, der in Eingriff steht mit einer Hülse, die sich um einen der Schwenkwellenabschnitte erstreckt und mit diesem drehverbunden ist.

Durch die Lagerung des Deckels in dem Verbindungsgestellabschnitt wird die Gefahr der Verformung des Deckels im Druckgarbetrieb erheblich reduziert. Da die Krafteinleitung des Antriebs zum Schwenken des Deckels in dem Verbindungsgestellabschnitt erfolgt, wird eine günstigere Drehmomentübertragung ermöglicht. Durch die Lagerung des Deckels im Verbindungsgestellabschnitt ist es möglich den Deckel leichter und flacher zu gestalten und so Gewicht und Material zu sparen. Weiterhin wird eine platzsparende Konstruktion des Deckelschwenkantriebs geschaffen, sodass der rückwärtige Verbindungsgestellabschnitt entsprechend schlank ausgebildet sein kann.

Vorteilhafterweise ist jeder der Schwenkwellenabschnitte in einem Bereich angeordnet, der im Wesentlichen der Mitte des Abstands von einer Mittenachse des Deckels zum entsprechenden linken bzw. rechten Seitenrand des Deckels entspricht. Dadurch ergibt sich eine besonders günstige Lagerung des Deckels, insbesondere zur Verringerung der Verformungsgefahr bei hohem Druck.

Weiterhin ist vorteilhaft, dass der Antrieb zum Schwenken des Deckels in Richtung Deckelmitte an einem der Schwenkwellenabschnitte angeordnet ist und an diesem angreift. Das von dem Antrieb aufgebrachte Drehmoment zum Schwenken des Deckels wird somit in einem relativ geringen Abstand von der Mittelachse des Deckels eingeleitet, wodurch eine leichtere Konstruktion des Deckelschwenkantriebs ermöglicht wird, weil das übertragende Drehmoment geringer ist als bei der Lösung nach dem Stand der Technik.

Ein besonderer Vorteil ergibt sich dadurch, dass der Schwenkhebel eine Außenverzahnung aufweist, die mit einer Außenverzahnung der Hülse in Eingriff steht. Dadurch wird eine einfache Ausgestaltung der Kraftübertragung des Antriebs des Deckels auf den Deckel geschaffen, wobei hier die Möglichkeit des Einsatzes von Standardelementen, wie Zahnrädern, besteht. Insbesondere ergibt sich der Vorteil, dass die Krafteinleitung des Antriebs zum Hochschwenken des Deckels im Hubbetrieb bzw. Ausfahrbetrieb des Linearantriebs erfolgt, weil der Antrieb in Druckrichtung, also beim Ausfahren stärker belastbar ist als in Zugrichtung, also beim Einfahren.

Vorteilhafterweise schlägt die vorliegende Erfindung vor, dass die Außenverzahnung des Schwenkhebels und/oder die Außenverzahnung der Hülse sich nur über einen Teilumfang des Schwenkhebels bzw. der Hülse erstrecken. Hierbei ergeben sich Vorteile durch Platzersparnis, Kostenersparnis und flexiblere Gestaltungsmöglichkeiten.

Im Rahmen der vorliegenden Erfindung kann der Antrieb zum Verschwenken des Deckels des Gargerätes elektrisch, hydraulisch oder pneumatisch angetrieben sein. Bei einem hydraulischen Antrieb besteht die Möglichkeit, das Schließen des Deckels durch kontrolliertes Ablassen des Hydraulikdrucks zu bewerkstelligen, was durch das relativ hohe Gewicht des Deckels gefördert wird.

Weiterhin ist vorteilhaft, dass zur Drehverbindung der Hülse mit dem zugeordneten Schwenkwellenabschnitt, die Hülse eine nach innen vorspringende Passfeder aufweist, die in eine entsprechende Passfedernut in dem zugehörigen Schwenkwellenabschnitt eingreift. Dadurch wird eine konstruktiv einfache und wirksame Kraftübertragung geschaffen.

Besonders vorteilhaft ist dabei, wenn die Passfeder und die Hülse einstückig miteinander ausgebildet sind und so Bauteile und Montagezeit gespart werden können.

Ein großer Vorteil ergibt sich weiterhin dadurch, dass die mit dem zugehörigen Schwenkwellenabschnitt drehfest verbundene Hülse aus einer Mehrzahl von Hülsenringen ausgebildet ist, die die Außenverzahnung aufweisen. Dies führt zu einem einfachen Aufbau der Hülse, wobei die Außenverzahnung und insbesondere der nur einen Teil des Außenumfangs besetzende Außenverzahnungsabschnitt günstig, beispielsweise mittels Laserschneiden erzeugt werden kann.

Diese Vorteile werden auch dadurch erreicht, dass der Schwenkhebel eine der Anzahl der Hülsenringe entsprechende Anzahl an Hebelringen mit Außenverzahnung aufweist.

Vorteilhafterweise sind die Hülsenringe und/oder die Hebelringe miteinander verbunden, insbesondere verstiftet, verschweißt oder verschraubt. Dabei kann vorteilhafterweise die Anzahl der Ringe in Abhängigkeit von dem Gewicht des Deckels, der Bauform und Baugröße der Hülsenringe bzw. Hebelringe und/oder deren Material angepasst werden.

Weitere Einzelheiten, Merkmalen Vorteile der vorliegenden Erfindung ergeben sich aus der nachfolgenden Beschreibung unter Bezugnahme auf die Zeichnungen. Darin zeigt:
- Fig. 1: eine schematische Draufsicht auf ein Gargerät gemäß der vorliegenden Erfindung bei geschlossenem Deckel und geöffneter Abdeckung der Deckellagerung und des Deckelschwenkantriebs;
- Fig. 2: eine schematische Seitenansicht des Deckelschwenkantriebs in der Position des geschlossenen Deckels;
- Fig. 3: in perspektivische Ansicht den erfindungsgemäßen Deckelschwenkantrieb; und
- Fig. 4: eine ähnliche Ansicht wie jene von Fig. 2, jedoch bei maximal geöffnetem Deckel.

In den Figuren sind gleiche Elemente mit den gleichen Bezugsziffern bezeichnet.

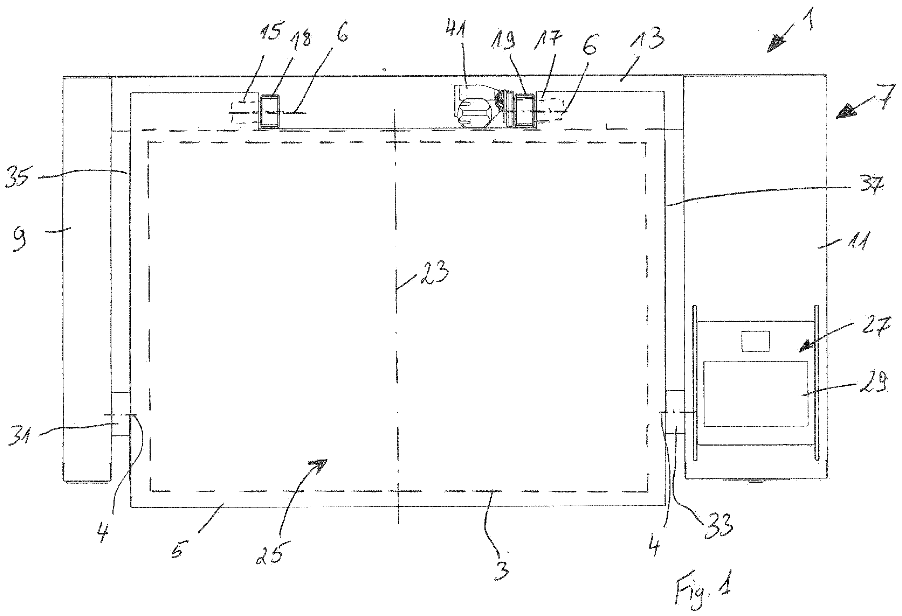

In Fig. 1 ist in Draufsicht ein Gargerät 1 in der Ausführungsform als Druckgargerät dargestellt. Das Druckgargerät 1 weist einen rechteckförmigen Tiegel 3, wie er im Stand der Technik bekannt ist, auf, und ist dieser Tiegel 3 an einer Tiegelschwenkachse 4 schwenkbar gelagert. Die Tiegelschwenkachse 4 ist ihrerseits in einem Gargerätgestell 7 gelagert, wobei das Gargerätgestell 7 in an sich bekannter Weise einen linken seitlichen Gestellabschnitt 9, einen rechten seitlichen Gestellabschnitt 11 und einen den linken und den rechten seitlichen Gestellabschnitt verbindenden rückwärtigen bzw. an der Rückseite des Tiegels angeordneten Verbindungsgestellabschnitt 13 aufweist.

Der linke seitliche Gestellabschnitt 9 ist relativ schlank ausgeführt, wohingegen der rechte seitliche Gestellabschnitt 11 deutlich breiter ausgeführt ist. Er umfasst unter anderem eine Anzeige- und Bedieneinheit 27 mit einem Touchscreen 29 und weitere Elemente, wie eine Gerätesteuerung (nicht dargestellt), eine Wasserzufuhr (nicht dargestellt) und elektrische Verbindungskabel (nicht dargestellt).

Der breite Gestellabschnitt kann links oder rechts des Tiegels angeordnet sein. Wird eine Bedienung an der linken Seite gewünscht ist entsprechend der linke Gestellabschnitt breiter und der rechte schmaler. Weiterhin gibt es sogenannte Teamgeräte mit mehreren Garräumen. Möglich ist es auch, beide Gestellabschnitte in gleicher Breite auszuführen.

Wie aus Fig. 1 weiterhin ersichtlich, ist der Tiegel 3, in dem ein rechteckförmiger Garraum 25 ausgebildet ist, von einem Deckel 5 überdeckt. Mit Ziffer 23 wird eine Mittenachse des Deckels 5 bezeichnet, die sich zwischen einem linken Seitenrand 35 und einem rechten Seitenrand 37 mittig erstreckt. Der Deckel 5 ist um eine Deckelschwenkachse 6 schwenkbar angeordnet und weist zwei Schwenkwellenabschnitte 15 und 17 auf, die in Deckellagern 18 und 19 schwenkbar gelagert sind und mit dem Deckel 5 verbunden, insbesondere verschweißt sind. Die Deckellager 18 und 19 sind an dem Verbindungsgestellabschnitt 13 angebracht und lagern somit den Deckel 5 an dem Verbindungsgestellabschnitt 13.

Die Schwenkwellenabschnitte 15 und 17 sind als Hohlwellenabschnitte ausgebildet und können einerseits zum Abführen von Dampf aus dem Garraum oder andererseits zum Durchleiten von elektrischen Kabeln für Temperaturfühler, Sensoren, Endschalter usw. dienen. Verfügt das Gargerät über eine automatische Reinigung und/oder einen automatischen Wasserzulauf können die Hohlwellenabschnitte zum durchleiten von Fluiden genutzt werden.

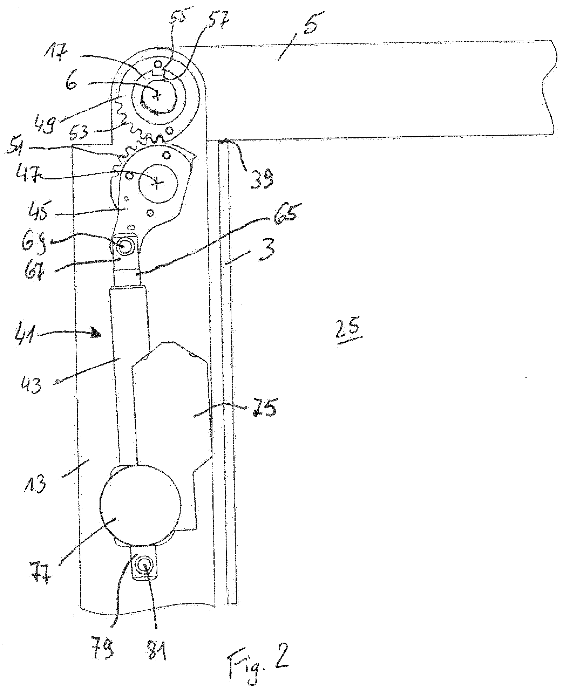

An dem rechten Schwenkwellenabschnitt 17 greift ein Deckelschwenkantrieb 41 an, der unter Bezugnahme auf die Fig. 2 bis 4 näher erläutert wird.

In Fig. 2 ist schematisch in Seitenansicht der Antrieb 41 zum Schwenken des Deckels 5 dargestellt. Der Deckelschwenkantrieb 41 weist einen Linearantrieb 43 auf, der mit einem Schwenkhebel 45 verbunden ist, der um eine Drehachse 47 drehbar gelagert ist. Der Schwenkhebel 45 weist eine abschnittsweise Außenverzahnung 51 auf, die in Eingriff steht mit einer abschnittsweisen Außenverzahnung 53 einer Hülse 49. Wie aus Fig. 2 ersichtlich befindet sich der Deckel 5 in horizontaler Schließposition in Anlage auf den Tiegel 3 zum Verschließen des Garraums 25. Eine Dichtung 39 dichtet den Garraum 25 gegenüber den Deckel 5 ab, nachdem der Deckel 5 gegenüber dem Tiegel 3 in seiner Schließposition verriegelt wurde.

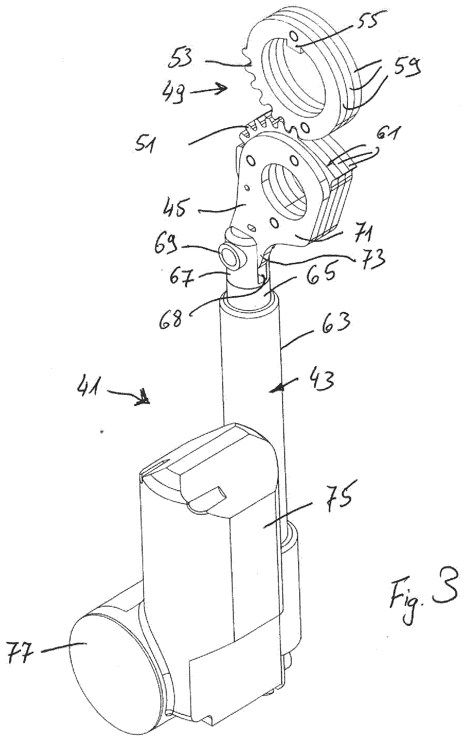

Es wird nunmehr Bezug genommen auf Fig. 3, in der der Deckelschwenkantrieb schematisch in perspektivischer Ansicht dargestellt ist. Der Linearantrieb 43 umfasst ein Außenrohr 63 und ein Innenrohr 65, das längsbeweglich in dem Außenrohr 63 bewegbar ist. In dem dargestellten Ausführungsbeispiel nach Fig. 3 wird die Schwenkbewegung des Hebels 45 erzeugt durch einen Elektromotor 75, der über ein Getriebe 77 mit dem Innenrohr 65 verbunden ist und in der Lage ist, das Innenohr 65 aus dem Außenrohr 63 nach oben hinauszudrücken bzw. wieder einzuziehen.

Zur Verbindung des oberen Endes des Innenohrs 63 mit dem Hebel 45 ist ein Gelenksabschnitt 67 vorgesehen, der eine Aufnahmenut 68 aufweist, in die ein Lagerabschnitt 73 des Schwenkhebels 45 einsetzbar ist und in der Darstellung nach Fig. 3 eingesetzt ist, wobei der Schwenkhebel 45 durch seinen Abschnitt 73 drehbar in dem Gelenksabschnitt 67 mittels einer Schwenklagerung 69 gelagert ist. Die Schwenklagerung ist beispielsweise bevorzugt als Gleitlager ausgebildet. Auch besteht die Möglichkeit, die Schwenklagerung als Kugellager/Rollenlager auszubilden.

Wie aus Fig. 2 ersichtlich, ist der Deckelschwenkantrieb 41 in dem Verbindungsgestellabschnitt 13 mittels einem Gelenksabschnitt 79 schwenkbar gelagert, wobei sich insbesondere auch der Linearantrieb 43 um eine Drehlagerachse 81 drehen kann.

Wie weiterhin aus Fig. 3 ersichtlich, ist gemäß einer bevorzugten Ausführungsform der Schwenkhebel 45 gebildet aus einem plattenförmigen Schwenkhebellagerelement 71, das verbunden ist mit einer Mehrzahl von plattenförmigen Hebelringen 61, die jeweils eine abschnittsweise Außenverzahnung 51 aufweisen. Die Außenverzahnungen 51 erstrecken sich somit nur über einen vorbestimmten Abschnitt des Außenumfangs bzw. Außenrandes des jeweiligen Hebelrings 61 und deren Anzahl ist abhängig von der Eingriffslänge zwischen Hebelringen 61 und Hülsenringen 59, wobei, wie aus Fig. 3 ersichtlich, die abschnittsweisen Außenverzahnungen 51 der Hebelringe 61 mit entsprechenden abschnittsweisen Außenverzahnungen 53 von Hülsenringen 59, die ebenfalls plattenförmigen ausgebildet sind, kämmen. Jeder der plattenförmigen Hülsenringe 59 weist eine einstückig angeformte Passfeder 55 auf, welche nach innen vorspringt und mit einer entsprechenden Nut des zugeordneten Schwenkwellenabschnitts (nicht dargestellt) in Eingriff steht.

Die Verzahnungsgeometrien können variabel gestaltet werden. So kann beispielsweise die Außenverzahnung der unteren Hülsenringe einen größeren Teilkreisdurchmesser aufweisen als die Obere. Durch eine geeignete Ausgestaltung lassen sich somit Übersetzungen oder sogar variable Übersetzungen realisieren.

Sowohl die Hülsenringe 59 als auch die Hebelringe 61, Letztere zusammen mit dem Schwenkhebellagerelement 71, sind miteinander verstiftet, verschweißt oder verschraubt und bilden sozusagen ein "Schwenkhebelpaket" bzw. ein "Hülsenpaket".

Dieser Aufbau bietet mehrere Vorteile: die Herstellung der Schwenkhebelringe 61 und der Hülsenringe 59 ist besonders einfach. Dabei führt die Herstellung der Außenverzahnung durch Laserbearbeitung zu einem exakten Arbeitsergebnis und verursacht keine großen Kosten. Anstelle einer Laserbearbeitung kann auch eine Bearbeitung mittels Wasserstrahlschneiden eingesetzt werden. Bei dünnen Blechen empfiehlt sich auch ein Stanzen.

Zudem ermöglicht diese konstruktive bevorzugte Ausführungsform einen modulartigen Aufbau der Kraftübertragung zwischen Schwenkhebel 45 und Hülse 49, wobei eine entsprechende Wahl zwischen der Dicke der plattenförmigen Hebel- bzw. Hülsenelemente einerseits und der Anzahl dieser Elemente andererseits zu einer äußerst flexiblen Ausgestaltung dieser Kraftübertragungselemente führt.

Alternativ können der Schwenkhebel und/oder die Schwenkhebelringe und/oder die Hülsenringe einstückig ausgebildet sein.

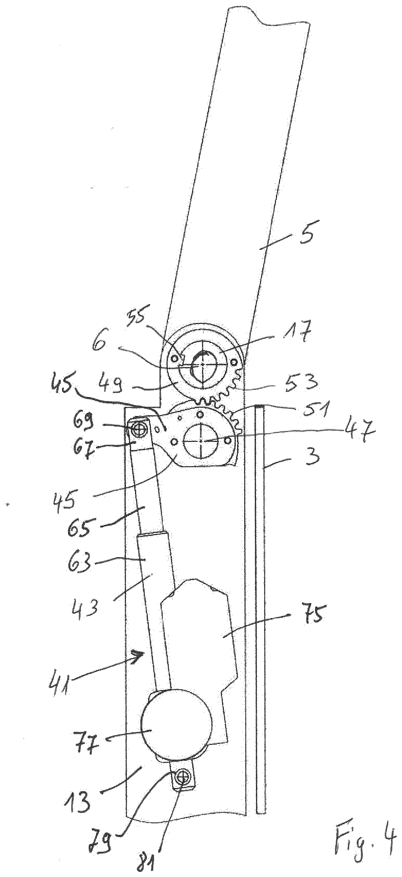

In Fig. 4 ist eine zur Darstellung von Fig. 2 vergleichbare Darstellung ersichtlich, die den maximalen Aufschwenkzustand des Deckels 5 zeigt, was durch die jeweilige Eingriffstellung der abschnittsweisen Außenverzahnungen 51 und 53 ersichtlich ist. Daraus ist auch die vorteilhafte Krafteinlenkung vom Antrieb 41 auf die Schwenkvorrichtung zum Heben und Senken des Deckels 5 ersichtlich, aufgrund des nur geringen Abstands der Schwenklagerung 69 von der Drehachse 47. Dadurch wird der große Vorteil einer geringen Breite des Verbindungsgestellabschnitts 13 ermöglicht, die zu entsprechenden Designvorteilen des gesamten Geräts führt.

Die vorliegende Erfindung ist nicht auf das dargestellte bevorzugte Ausführungsformbeispiel beschränkt. So kann alternativ eine Deckellagerung vorgesehen werden, die im Wesentlichen im Bereich der Mittenachse 23 angeordnet ist und den Deckel 5 am Verbindungsgestellabschnitt 13 lagert.

### Bezugszeichenliste:

1 - Gargerät, insbesondere Druckgargerät
3 - Tiegel
4 - Tiegelschwenkachse
5 - Deckel
6 - Deckelschwenkachse
7 - Gargerätgestell
9 - linker seitlicher Gestellabschnitt
11 - rechter seitlicher Gestellsabschnitt
13 - Verbindungsgestellabschnitt
15 - Schwenkwellenabschnitt
17 - Schwenkwellenabschnitt
18 - Deckellager
19 - Deckellager
21 - rechteckförmiger Garraum
23 - Mittenachse
25 - Garraum
27 - Anzeige- und Bedieneinheit
29 - Touchscreen
31 - linke Tiegelschwenkachse
33 - rechte Tiegelschwenkachse
35 - linker Seitenrand
37 - rechter Seitenrand
39 - Dichtung
41 - Deckelschwenkantrieb
43 - Linearantrieb
45 - Schwenkhebel
47 - Drehachse
49 - Hülse
51 - Außenverzahnung
53 - Außenverzahnung
55 - Passfeder
57 - Passfedernut
59 - Hülsenring
61 - Hebelring
63 - Außenrohr
65 - Innenrohr
67 - Gelenksabschnitt
68 - Aufnahmenut
69 - Schwenklagerung
71 - Schwenkhebellagerelement
73 - Lagerabschnitt
75 - Elektromotor
77 - Getriebe
79 - Gelenksabschnitt
81 - Drehlagerachse

## Patentansprüche

1. Gargerät (1), insbesondere Druckgargerät, mit einem Tiegel (3), der einen rechteckförmigen Garraum (25) aufweist, der von einem schwenkbaren Deckel (5) verschließbar ist, wobei der Tiegel (3) mittels einer Tiegelschwenkachse (4) schwenkbar in einem Gargerätgestell (7) gelagert ist und der Deckel (5) mittels eines Antriebs (41) um eine Deckelschwenkachse (6) schwenkbar ist, wobei das Gargerätgestell (7) zwei seitliche Gestellabschnitte (9, 11) und einen an der Rückseite des Tiegels (3) angeordneten, die beiden seitlichen Gestellabschnitte (9, 11) verbindenden Verbindungsgestellabschnitt (13) aufweist, wobei um die Deckelschwenkachse (6) zwei Schwenkwellenabschnitte (15, 17) angeordnet sind, die drehbeweglich (18, 19) an dem Verbindungsgestellabschnitt (13) angeordnet sind,
**dadurch gekennzeichnet, dass**
der Antrieb (41) zum Schwenken des Deckels (5) in dem Verbindungsgestellabschnitt (13) angeordnet ist und einen Linearantrieb umfasst, der in der Lage und dazu eingerichtet ist, einen um eine Drehachse (47) gelagerten Schwenkhebel (45) zu verschwenken, der in Eingriff steht mit einer Hülse (49), die sich um einen der Schwenkwellenabschnitte (17) erstreckt und mit diesem drehverbunden ist.

2. Gargerät nach Anspruch 1, **dadurch gekennzeichnet, dass** jeder der Schwenkwellenabschnitte (15, 17) in einem Bereich angeordnet ist, der im Wesentlichen der Mitte des Abstands von einer Mittenachse (23) des Deckels (5) zum entsprechenden linken bzw. rechten Seitenrand (35 bzw. 37) des Deckels (5) entspricht.

3. Gargerät nach Anspruch 1 oder 2, **dadurch gekennzeichnet, dass** der Antrieb (41) zum Schwenken des Deckels (5) in Richtung der Deckelmitte (23) an einem der Schwenkwellenabschnitte (17) angeordnet ist und an diesem angreift.

4. Gargerät nach einem der Ansprüche 1 bis 3, **dadurch gekennzeichnet, dass** der Schwenkhebel (45) eine Außenverzahnung (51) aufweist, die mit einer Außenverzahnung (53) der Hülse (49) in Eingriff steht.

5. Gargerät nach Anspruch 4, **dadurch gekennzeichnet, dass** die Außenverzahnung (51) des Schwenkhebels (45) und/oder die Außenverzahnung (53) der Hülse (49) sich nur über einen Teilumfang des Schwenkhebels (45) bzw. der Hülse (49) erstrecken.

6. Gargerät nach einem der Ansprüche 1 bis 5, **dadurch gekennzeichnet, dass** der Antrieb (41) zum Verschwenken des Deckels des Gargerätes elektrisch, hydraulisch oder pneumatisch angetrieben ist.

7. Gargerät einem der Ansprüche 1 bis 6, **dadurch gekennzeichnet, dass** zur Drehverbindung der Hülse (49) mit dem zugeordneten Schwenkwellenabschnitt (17), die Hülse (49) eine nach innen vorspringende Passfeder (55) aufweist, die in eine entsprechende Passfedernut (57) in dem zugehörigen Schwenkwellenabschnitt (17) eingreift.

8. Gargerät nach Anspruch 7, **dadurch gekennzeichnet, dass** die Passfeder (55) und die Hülse (49) einstückig miteinander ausgebildet sind.

9. Gargerät nach einem der Ansprüche 1 bis 8, **dadurch gekennzeichnet, dass** die mit dem zugehörigen Schwenkwellenabschnitt (17) drehfest verbundene Hülse (49) aus einer Mehrzahl von Hülsenringen (59) ausgebildet ist, die die Außenverzahnung (53) aufweisen.

10. Gargerät nach Anspruch 9, **dadurch gekennzeichnet, dass** der Schwenkhebel (45) eine der Anzahl der Hülsenringe (59) entsprechende Anzahl an Hebelringen (61) mit Außenverzahnung (51) aufweist.

11. Gargerät nach Anspruch 10, **dadurch gekennzeichnet, dass** das die Hülsenringe (59) und/oder die Hebelringe (61) miteinander verbunden, insbesondere verstiftet, verschweißt oder verschraubt sind.

## Claims

1. Cooking device (1), in particular a pressure cooker, having a pot (3) which has a rectangular cooking chamber (25) which can be closed using a pivotable lid (5), wherein the pot (3) can be pivotably mounted in a cooking device frame (7) by means of a pot pivot axis (4) and the lid (5) can be pivoted about a lid pivot axis (6) by means of a drive (41), wherein the cooking device frame (7) has two lateral frame sections (9, 11) and a connecting frame section (13) arranged on the rear side of the pot (3) and connecting the two lateral frame sections (9, 11), wherein two pivot shaft sections (15, 17), which are arranged about the lid pivot axis (6), are arranged to be rotatable (18, 19) on the connecting frame section (13),
**characterized in that**
the drive (41) for pivoting the lid (5) is arranged in the connecting frame section (13) and comprises a linear drive which is capable of and designed to pivot a pivot lever (45), which is mounted about an axis of rotation (47) and is in engagement with a sleeve (49) that extends about one of the pivot shaft sections (17) and is rotationally connected to the same.

2. Cooking device according to claim 1, **characterized in that** each of the pivot shaft sections (15, 17) is arranged in an area which substantially corresponds to the middle of the distance from a center axis (23) of the lid (5) to the corresponding left or right side edge (35 or 37) of the lid (5).

3. Cooking device according to claim 1 or 2, **characterized in that** the drive (41) is arranged on one of the pivot shaft sections (17) and engages with the same for pivoting the lid (5) in the direction of the lid center (23).

4. Cooking device according to one of claims 1 to 3, **characterized in that** the pivot lever (45) has an external toothing (51) which is in engagement with an external toothing (53) of the sleeve (49).

5. Cooking device according to claim 4, **characterized in that** the external toothing (51) of the pivot lever (45) and/or the external toothing (53) of the sleeve (49) extends only across a partial circumference of the pivot lever (45) or of the sleeve (49).

6. Cooking device according to one of claims 1 to 5, **characterized in that** the drive (41) for pivoting the lid of the cooking device is driven electrically, hydraulically or pneumatically.

7. Cooking device according to one of claims 1 to 6, **characterized in that** the sleeve (49) has an inwardly projecting feather key (55) which engages into a corresponding feather key groove (57) in the associated pivot shaft section (17) for rotationally connecting the sleeve (49) to the associated pivot shaft section (17).

8. Cooking device according to claim 7, **characterized in that** the feather key (55) and the sleeve (49) are formed integrally with one another.

9. Cooking device according to one of claims 1 to 8, **characterized in that** the sleeve (49), connected to be rotationally fixed with the associated pivot shaft section (17), is formed from a plurality of sleeve rings (59) which have the external toothing (53).

10. Cooking device according to claim 9, **characterized in that** the pivot lever (45) has a number of lever rings (61) with an external toothing (51) corresponding to the number of sleeve rings (59).

11. Cooking device according to claim 10, **characterized in that** the sleeve rings (59) and/or the lever rings (61) are connected to each other, in particular pinned, welded, or screwed.

## Revendications

1. Appareil de cuisson (1), notamment appareil de cuisson sous pression, pourvu d'un poêlon (3), qui comporte un espace de cuisson (25) de forme rectangulaire, qui peut se fermer à l'aide d'un couvercle (5) pivotant, au moyen d'un axe de pivotement (4) de poêlon, le poêlon (3) étant logé de manière pivotante dans un châssis (7) d'appareil de cuisson et le couvercle (5) étant pivotant au moyen d'un entraînement (41) autour d'un axe de pivotement (6) de couvercle, le châssis (7) d'appareil de cuisson comportant deux sections (9, 11) latérales de châssis et une section de châssis (13) de liaison placée sur la face arrière du poêlon (3), reliant les deux sections (9, 11) latérales de châssis, autour de l'axe de pivotement (6) de couvercle étant placées deux sections (15, 17) d'arbre de pivotement, qui sont placées de manière déplaçable en rotation (18, 19) sur la section de châssis (13) de liaison,
**caractérisé en ce que**
l'entraînement (41) destiné à pivoter le couvercle (5) est placé dans la section de châssis (13) de liaison et comprend un entraînement linéaire, qui est apte à et configuré pour faire pivoter un levier de pivotement (45) logé autour d'un axe de rotation (47), qui est en engagement avec un manchon (49), qui s'étend autour de l'une des sections (17) d'arbre de pivotement et qui est relié avec celui-ci de manière solidaire en rotation.

2. Appareil de cuisson selon la revendication 1, **caractérisé en ce que** chacune des sections (15, 17) d'arbre de pivotement est placée dans une zone qui correspond sensiblement au centre de l'écart d'un axe médian (23) du couvercle (5) par rapport au bord latéral (35 ou 37) gauche ou droit correspondant du couvercle (5).

3. Appareil de cuisson selon la revendication 1 ou 2, **caractérisé en ce que** l'entraînement (41) destiné à faire pivoter le couvercle (5) est placé dans la direction du centre (23) du couvercle sur l'une des sections (17) d'arbre de pivotement et s'engage sur celle-ci.

4. Appareil de cuisson selon l'une quelconque des revendications 1 à 3, **caractérisé en ce que** le levier de pivotement (45) comporte une denture extérieure (51) qui est en engagement avec une denture extérieure (53) du manchon (49).

5. Appareil de cuisson selon la revendication 4, **caractérisé en ce que** la denture extérieure (51) du levier de pivotement (45) et / ou la denture extérieure (53) du manchon (49) ne s'étendent que sur une périphérie partielle du levier de pivotement (45) ou du manchon (49).

6. Appareil de cuisson selon l'une quelconque des revendications 1 à 5, **caractérisé en ce que** l'entraînement (41) destiné à faire pivoter le couvercle de l'appareil de cuisson est entraîné par moyen électrique, hydraulique ou pneumatique.

7. Appareil de cuisson selon l'une quelconque des revendications 1 à 6, **caractérisé en ce que** pour la liaison en rotation du manchon (49) avec la section (17) d'arbre de pivotement associée, le manchon (49) comporte une clavette (55) saillant vers l'intérieur, qui s'engage dans une rainure (57) de clavette dans la section (17) d'arbre de pivotement correspondante.

8. Appareil de cuisson selon la revendication 7, **caractérisé en ce que** la clavette (55) et le manchon (49) sont conçus ensemble d'un seul tenant.

9. Appareil de cuisson selon l'une quelconque des revendications 1 à 8, **caractérisé en ce que** le manchon (49) relié de manière solidaire en rotation avec la section (17) d'arbre de pivotement correspondante est conçu en une pluralité de bagues (59) de manchon, qui comportent la denture extérieure (53).

10. Appareil de cuisson selon la revendication 9, **caractérisé en ce que** le levier de pivotement (45) comporte un nombre de bagues (61) de levier avec denture extérieure (51) correspondant au nombre de bagues (59) de manchon.

11. Appareil de cuisson selon la revendication 10, **caractérisé en ce que** les bagues (59) de manchon et / ou les bagues (61) de leviers sont reliées, notamment goupillées, soudées ou vissées les unes avec les autres.
